Europäisches Patentamt

European Patent Office

Office européen des brevets

(11) Veröffentlichungsnummer: **0 262 553 B1**

## EUROPÄISCHE PATENTSCHRIFT

(45) Veröffentlichungstag der Patentschrift: **12.01.94**

(21) Anmeldenummer: **87113802.0**

(22) Anmeldetag: **22.09.87**

(51) Int. Cl.$^5$: **D21C 9/00**, C08B 1/00,
D01F 2/00

Die Akte enthält technische Angaben, die nach dem Eingang der Anmeldung eingereicht wurden und die nicht in dieser Patentschrift enthalten sind.

(54) **Verfahren zum Behandeln von cellulosischen Rohstoffen.**

(30) Priorität: **03.10.86 DE 3633737**

(43) Veröffentlichungstag der Anmeldung:
**06.04.88 Patentblatt 88/14**

(45) Bekanntmachung des Hinweises auf die
Patenterteilung:
**12.01.94 Patentblatt 94/02**

(84) Benannte Vertragsstaaten:
**DE ES FR GB IT NL**

(56) Entgegenhaltungen:
GB-A- 470 764      GB-A- 557 324
US-A- 1 838 367     US-A- 1 880 047
US-A- 1 924 623     US-A- 2 054 854

ABSTRACT BULLETIN OF THE INSTITUTE OF PAPER CHEMISTRY, Band 51, Nr. 3,September 1980, Seite 315, Nr. 2777, Appleton Wisconsin, US; A. NAVAS NAVAS etal.: "Amount of hemicelluloses in pulp: influence of alkaline extraction",& ATIP REV. 34, Nr. 2: 67-80 (Februar 1980)

(73) Patentinhaber: **Akzo N.V.**
**Postbus 186**
**Velperweg 76**
**NL-6800 LS Arnhem(NL)**

(72) Erfinder: **Behnke, Joachim, Dr.**
**Tannhäuser Weg 2**
**D-5608 Radevormwald(DE)**
Erfinder: **Schulze, Helmut, Dr.**
**Hagenstrasse 8**
**D-8751 Grosswallstadt(DE)**
Erfinder: **Berg, Ernst A., Dr.**
**Zum Lohbusch 49**
**D-5600 Wuppertal 1(DE)**
Erfinder: **Pelger, Michael Dr.**
**Wilhelm-Dissmann-Strasse 5**
**D-5600 Wuppertal 22(DE)**

(74) Vertreter: **Fett, Günter**
**Akzo Patente GmbH,**
**Postfach 10 01 49**
**D-42097 Wuppertal (DE)**

EP 0 262 553 B1

EP 0 262 553 B1

**Beschreibung**

Die Erfindung betrifft ein Verfahren zur Gewinnung extraktstoffreduzierter Cellulose mit geringer LAL-Reaktion und die Verwendung dieser Cellulose zu Hämodialyse- und/oder Hämofiltrationsmembranen.

Bei der Qualität von Hämodialyse- und/oder Hämofiltrationsmembranen werden höchste Anforderungen an die Reinheit gestellt. So muß der alpha-Cellulosegehalt mindestens 98 %, der Polymerisationsgrad 500 oder mehr betragen und die noch in Cellulose verbliebenen Inhaltsstoffe dürfen keine toxischen oder nachteiligen medizinischen Wirkungen auf einen Dialysepatienten ausüben.

Bei den zur Zeit auf dem Markt erhältlichen Hämodialysemembranen aus regenerierter Cellulose zeigen die wäßrigen Extrakte bei Analyse über HPLC einen Peak für höhermolekulare Substanzen mit einem Molekulargewicht im Bereich von 20.000 bis 90.000 (Daltons).

(Ward RA, Feldhoff PW, Klein E: Role of Dialyzer Contaminants in the Allergic Epiphenomena of Hemodialysis; Artif Org 8, 338 (1983)).

Zusätzlich wurde festgestellt, daß diese Extrakte sehr hohe positive Werte in Tests mit Limulus Amöbocyten - Lysaten (LAL) bestimmter Hersteller wie Travenol oder Concept (Heidelberg) anzeigen. Der Test mit LAL von Mallinckrodt zeigt negative Reaktion. Obwohl diese Teste normalerweise als Nachweis für Endotoxine und damit Pyrogene verwendet werden, wurde in Pyrogen-Tests an Kaninchen nachgewiesen, daß es sich hierbei um eine falschpositive Reaktion handelt. Weitere Untersuchungen haben gezeigt, daß es sich aller Wahrscheinlichkeit nach um oligomere bzw. polymere Zucker handeln könnte (Henne W, Schulze H, Pelger M, Tretzel J, von Sengbusch G: Hollow Fiber Dializers and their Pyrogenicity Testing by Limulus Amöbocyte Lysate; Pearson FC, Bohon J, Lee W, Bruszer G, Sagona M, Dawe R, Jakubowski G, Morrison D, Dinarello C:
Comparison of Chemical Analyses of Hollow Fiber Dialyzer Extracts; Artif Org 8, 291 (1983).

Bis jetzt war es nur möglich, den Anteil an extrahierbaren hochmolekularen Stoffen durch eine Wasserwäsche am fertigen Dialysator zu reduzieren und über eine spezielle Nachbehandlung die Membraneigenschaften zu konservieren (DE-A-33 19 504). Dieses Verfahren ist sehr aufwendig, weil die Behandlung an jedem einzelnen Dialysator erfolgen muß.

Die im einzelnen noch unbekannten Extraktstoffe, die die beschriebene falsch positive LAL-Reaktion zeigen, liegen in Konzentrationen in der Größenordnung von ng/g Cellulose vor und lassen sich deshalb auch nur durch so empfindliche Testmethoden nachweisen, wie sie der LAL-Test ist. Eine weitere Gruppe von Extraktstoffen, die sich in einer Konzentration von weniger als 0,1 % der Cellulose nachweisen läßt, konnte bisher ebenfalls in der stofflichen Zusammensetzung noch nicht eindeutig identifiziert werden. Diese Stoffe lassen sich durch HPLC-Chromatografie im Bereich eines Molekulargewichtes von 20 000 bis 90 000 (Daltons) nachweisen.

Es wurde die Aufgabe gestellt, bereits im Rohstoff die infrage stehenden Extraktstoffe zu eliminieren und eine Einzelnachbehandlung von Dialysatoren überflüssig zu machen. Gelöst wurde diese Aufgabe mit einem Verfahren welches sich dadurch auszeichnet, daß raffinierte Baumwollinters oder Zellstoffe im Anschluß an die übliche Aufschlußbehandlung einer Druckwäsche mit Wasser, Lauge einer Konzentration von weniger als 5 g/l Alkaligehalt oder einer verdünnten Säure mit weniger als 5 g/l Säuregehalt bei Temperaturen von 120 bis 170 °C und einem Druck von 2 bis 10 bar 1 bis 4 Stunden unterworfen werden.

Durch diese einfache Zwischenstufe einer Druckwäsche gelingt es überraschenderweise, die Extraktstoffe zu entfernen und aus der so behandelten Cellulose Dialysemembranen herzustellen, in denen sich die erwähnten Extraktstoffe praktisch nicht mehr nachweisen lassen. Die LAL-Reaktion ist auf einen Bruchteil des üblicherweise gemessenen Wertes reduziert. Während nach einer Heißwassersterilisation und zum Teil auch nach dem o.a. Extraktionsverfahren am Dialysator später bei einer erneuten Extraktion sich noch mehr oder weniger der Extraktstoffe finden, ist beim erfindungsgemäßen Verfahren dieses nicht der Fall.

Bei der Gewinnung von Cellulose aus cellulosischem Material wie Holz oder Baumwollinters erfolgt üblicherweise eine Aufschlußbehandlung während des Verfahrens. Dadurch soll der alpha-Cellulosegehalt auf den höchstmöglichen Gehalt gebracht werden. Bei Holzzellstoff erfolgt der Aufschluß üblicherweise nach dem Sulfit- oder Sulfatverfahren.

Es sind bereits Behandlungen zur Raffination von Cellulose mit verdünnten Säuren bei erhöhten Temperaturen im Rahmen der üblichen Aufschlußverfahren bekannt geworden.

So beschreibt beispielsweise die DE-A-337 672 das Kochen von roher brauner Cellulose (offensichtlich ligninhaltiger Cellulose) mit 0,5%iger HCl in einem offenen Kessel. Die gewonnene Cellulose soll anstelle reiner Rohcellulose wie z. B. gebleichtem Flachs, gebleichter Baumwolle oder Ramiefaser für die Herstellung von Kunstspinnfasern eingesetzt werden.

2

Das DE-A-344 749 (Zusatz zu DE-A-337 672) beschreibt beispielsweise eine entsprechende Kochbehandlung mit 0,2 % HCl oder $H_2SO_4$ bei einem Überdruck von 0,5 bar.

Aus der DE-A-394 436 ist ein anderes Verfahren bekannt, bei dem in Xanthogenat überzuführender gebleichter Handelszellstoff mit sehr verdünnter Salz- oder Schwefelsäure behandelt wird. Beispielsweise wird die Cellulose im offenen Gefäß mit 0,5%iger Salzsäure etwa 2 Stunden auf etwa 100 °C erwärmt. Die Behandlung dient dazu, 15- und mehrprozentige Celluloselösungen zu ermöglichen, was darauf hindeutet, daß die Behandlung zu einer Verringerung des Polymerisationsgrades führt.

In der US-A-1,924,623 ist ein Verfahren zur Reinigung von Celllulosefasern beschrieben, bei dem die Behandlungstemperatur 175°C und mehr beträgt. Die für die Reinigung notwendige Druckwäsche erfolgt während einer Zeit von 4 h mit einer alkalischen Lauge.

Bei diesem Verfahren wird jedoch der Polymerisationsgrad der Cellulose erniedrigt und es tritt praktisch kein Abbau der Stoffe mit falsch-positiver LAL-Reaktion auf, so daß nach der US-A-1,924,623 die Erzeugung von Membranen mit ausreichender Biokompatibilität nur schwer möglich ist.

Auch die CH-A-95 825 beschreibt ein Verfahren zur Vorbehandlung von Holzzellstoff, der zur Herstellung von Viskose dienen soll, mit Säuren bei einem Überdruck von bis zu 0,5 bar Überdruck. Auch hier wird rohe, braune, offensichtlich ligninhaltige Cellulose behandelt.

Aus der CA-A-323 241 ist ein Verfahren bekannt, bei dem aufgeschlossener, unraffinierter Zellstoffbrei, wie er beim Sulfit- oder Sulfatverfahren oder mit Baumwollinters anfällt, bei Temperaturen oberhalb 175 °C mit Wasser oder einer Alkalilösung, die 0,1 bis 0,2 % eines alkalischen Stoffes wie Natriumkarbonat enthält, behandelt wird. Dieses sogenannte Beuchverfahren bildet den Abschluß bekannter Zellstoffaufschlußverfahren.

Die nach den vorgenannten Verfahren erhaltenen Zellstoffe können zwar einen sehr hohen $\alpha$-Cellulosegehalt aufweisen. Die zuvor erläuterten Extraktstoffe, die in der HPLC einen Peak für höhermolekulare Substanzen mit einem Molekulargewicht im Bereich von 20 000 bis 90 000 (Daltons) bzw. eine falschpositive LAL-Reaktion zeigen, werden bei den bekannten Verfahren nicht entfernt. Die erfindungsgemäße Druckwäsche erfolgt erfindungsgemäß zusätzlich im Anschluß an die bebeschriebene Aufschlußbehandlung.

In bevorzugter Weise erfolgt diese Druckwäsche im Temperaturbereich von 150 bis 170 °C bei einem Druck von 5 bis 10 bar über 2 bis 4 Stunden.

Obwohl die Druckwäsche mit reinem Wasser zu hervorragenden Ergebnissen führt, hat es sich unter bestimmten Voraussetzungen als zweckmäßig erwiesen, die Druckwäsche mit verdünnter Lauge oder mir verdünnter Säure durchzuführen. Dabei muß die Alkalikonzentration unter 5 g/l, vorzugsweise unter 2 g/l, oder die Säurekonzentration unter 5 g/l (gerechnet als $H_2SO_4$), vorzugsweise unter 1,5 g/l bleiben, um Schädigungen der Cellulose zu vermeiden.

Besonders günstig wirkt sich für die Verringerung der LAL-falschpositiven Extraktstoffe der Einsatz von verdünnten Säuren aus, deren $pK_a$-Wert größer als 2,5, insbesondere größer als 4,0 ist. Als gut geeignet haben sich Malonsäure, Zitronensäure, Buttersäure, Hydroxypropionsäure, Weinsäure erwiesen. Bei Einsatz dieser Säuren, bleibt der Polymerisationsgrad weitgehend erhalten.

Aufgrund der Extraktstoffreduzierung und der verringerten LAL-Reaktion ist die erfindungsgemäß gewonnene Cellulose besonders für die Verwendung bei der Herstellung von Hämodialyse- und/oder Hämofiltrationsmembranen in Form von Flachmembranen, Schlauchmembranen oder Hohlfäden durch Regeneration einer Celluloselösung geeignet.

Dabei kann die Regeneration aus Lösungen der Cellulose in Cellulosexanthat, tertiärem Aminoxid oder LiCl-enthaltenden Lösungsmitteln für die Cellulose erfolgen. Bevorzugt ist die Regeneration aus Cuoxamlösungen (Schweizers Reagenz, Kupfertetramminhydroxid) denn für Hämodialysezwecke bietet nach dem Cuoxamverfahren regenerierte Cellulose aufgrund der Abstimmung ihrer dialytischen Eigenschaften besondere Vorteile.

Die Erfindung betrifft daher auch die Verwendung der gewonnenen Cellulose bei der Regeneration aus Lösungen gemäß den Ansprüchen 6 bis 9.

Anhand der nachfolgenden Beispiele wird die Erfindung näher erläutert.

Vergleichsbeispiele:

Je ein Dialysator des Typs AM 1000 U, AM Neo 1000 M (Hohlfaser-Hersteller Asahi), TAF 10 (Hohlfaser-Hersteller Terumo), CF 1211 (Hohlfaser-Hersteller Enka) wurden durch Rezirkulation von 300 ml Wasser auf der Blutseite und 1000 ml Wasser auf der Dialysatseite über eine Zeit von 3 Std. extrahiert. 10 ml der Lösung wurden zur Bestimmung der LAL-reaktiven Substanz entnommen, der Rest wurde eingeengt (ca. 0,8 ml) und in 2 ml wäßriger 0.01 molarer $NaClO_4$-Lösung aufgenommen.

50 ml dieser Lösung wurden über eine Säule TSK-2000SW (7,5 x 600 mm) mit Vorsäule (7,5 x 100 mm) der Firma KB Instrument GmbH bei einem Fluß mit 0,5 ml/min untersucht. Als Detektor wurde ein Differentialrefraktometer der Firma Knaur im Meßbereich 2 eingesetzt. Als Fließmittel wurde 0,01 molare NaClO$_4$-Lösung mit 0,05 % Natriumdodecylsulfat verwendet.

Zur Bestimmung der Konzentration an Extraktstoffen wurden die am Differentialrefraktometer gemessenen Spannungen registriert und auf 1 m$^2$ Membranfläche bezogen. So sind die in der Tabelle 2 aufgeführten Konzentrationsmaße in der Dimension mV/m$^2$ Membranfläche angegeben und unmittelbar miteinander vergleichbar. Die Eichung der Säule erfolgte mit Pullulanen der Firma Showa Denko K.K., Japan.

Der Anteil an LAL-reaktivem Material wurde mit dem Lysat "Pyrogel$^{(R)}$" der Firma Concept bestimmt. Da der LAL-Test auf pyrogene Substanzen geeicht wird und nicht auf die hier infrage kommenden Extraktstoffe, schwanken die absoluten Werte mit unterschiedlichen Testmaterialchargen sehr stark.

Auf einen Standardextrakt bezogene relative LAL-Werte sind jedoch gut reproduzierbar. Deshalb wurde bei jeder Probe eine Parallelmessung mit einem Standardextrakt (aus Cuprophan$^{(R)}$-Membranen) durchgeführt und der Meßwert der Probe auf diesen Standardextrakt bezogen. In Tabelle 2 sind die so erhaltenen relativen LAL-Werte angegeben.

Beispiele 1 - 4

Nach dem üblichen Beuchprozeß wurde Linterscellulose einer weiteren einmaligen bzw. mehrfachen Druckwäsche mit Wasser bzw. verdünnter NaOH-Lösung(2g/l) entsprechend den in der Tabelle 1 aufgeführten Bedingungen unterzogen.

## Tabelle 1

| Beispiel | Bedingungen der Druckwäsche |
|---|---|
| 1 | Druckwäsche mit Wasser 2 h bei 165 °C / 8 bar |
| 2 | Druckwäsche mit verd. Natronlauge; 2 g/l 2 h bei 165 °C / 8 bar |
| 3 | Druckwäsche mit Wasser; 3 h bei 165 °C / 8 bar |
| 4 | Druckwäsche zweimal mit Wasser je 30 min, 130 °C / 3 bar |

Nach der anschließenden Bleiche wurde die Linterscellulose aus Cuoxamlösung zu Hohlfasern mit 8 μm Trockenwandstärke und 200 μm Innendurchmesser verarbeitet. Die daraus gefertigten Dialysatoren mit jeweils 1 m$^2$ effektiver Oberfläche wurden entsprechend Vergleichsbeispielen extrahiert und über HPLC auf hochmolekulare Extraktstoffe und LAL-reaktives Material untersucht.

Die Ergebnisse sind in der Tabelle 2 zusammengestellt. Hochmolekulare Extrakte und LAL-reaktives Material konnten also wesentlich gegenüber handelsüblichen Dialysatoren vermindert werden.

4

## Tabelle 2

|  | HPLC<br>Peakhöhe RI<br>$(mV/m^2)$ | LAL-Test<br>nach Concept<br>relativ |
|---|---|---|
| **Vergleichsbeispiel** | | |
| TAF 10 | 7,9 | 1,18 |
| AM Neo 1000 M | 5,4 | 1,15 |
| AM 1000 U | 6,0 | 0,76 |
| CF 1211 | 12,5 | 1,00 |
| **Beispiele** | | |
| Beispiel 1 | 3,0 | 0,48 |
| Beispiel 2 | 0,5 | 0,24 |
| Beispiel 3 | 1,0 | 0,12 |
| Beispiel 4 | 2,7 | 0,21 |

Beispiel 5

Zu einem von der Beuche her schwach alkalisch reagierenden gebeuchten Baumwollinterszellstoff wurde solange Malonsäure zugegeben, bis der $p_H$-Wert 5,1 betrug. Anschließend erfolgte eine Druckwäsche über 3 h bei 165 °C und 8 bar. Nach der anschließenden Bleiche wurde die Cellulose zu Hohlfäden mit 8 µm Trockenwandstärke verarbeitet. Aus diesen Hohlfäden wurden die Extrakte gewonnen und analysiert. Der Polymerisationsgrad der Cellulose in den Hohlfäden betrug 778. Die HPLC Peakhöhe RI wurde zu 0,6 $mV/m^2$ ermittelt und der LAL-Test nach Concept ergab einen relativen Wert von 0,12.

**Patentansprüche**

1. Verfahren zur Gewinnung von extraktstoffreduzierter Cellulose mit geringer LAL-Reaktion, für die Herstellung von Hämodialyse- und/oder Hämofiltrationsmembranen in Form von Flachmembranen, Schlauchmembranen oder Hohlfäden durch Regeneration einer Celluloselösung, dadurch gekennzeichnet, daß raffinierte Baumwollinters oder Zellstoffe im Anschluß an die übliche Aufschlußbehandlung einer Druckwäsche mit Wasser, Lauge einer Konzentration von weniger als 5 g/l Alkaligehalt oder einer verdünnten Säure mit weniger als 5 g/l Säuregehalt bei Temperaturen von 120 bis 170 °C und einem Druck von 2 bis 10 bar 1 bis 4 Stunden unterworfen werden.

2. Verfahren nach Anspruch 1, dadurch gekennzeichnet, daß die Druckwäsche bei Temperaturen von 150 bis 170 °C und bei einem Druck von 5 bis 10 bar über 2 bis 4 Stunden erfolgt.

3. Verfahren nach einem der Ansprüche 1 oder 2, dadurch gekennzeichnet, daß die Druckwäsche mit einer verdünnten Säure mit weniger als 1,5 g/l Säuregehalt erfolgt.

4. Verfahren nach einem der Ansprüche 1 oder 2, dadurch gekennzeichnet, daß die Druckwäsche mit einer verdünnten Lauge von weniger als 2 g/l Alkaligehalt erfolgt.

5. Verfahren nach einem oder mehreren der Ansprüche 1 bis 4, dadurch gekennzeichnet, daß die Druckwäsche mit verdünnten Säuren mit einem $pK_a$-Wert von 2,5 oder höher erfolgt.

6. Verwendung der nach einem oder mehreren der Ansprüche 1 bis 5 hergestellten Cellulose, bei der Regeneration aus einer Lösung der Cellulose in Cuoxam.

7. Verwendung der nach einem oder mehreren der Ansprüche 1 bis 5 hergestellten Cellulose, dadurch gekennzeichnet, daß die Cellulose aus einer Cellulosexanthatlöung regeneriert wird.

8. Verwendung der nach einem oder mehreren der Ansprüche 1 bis 5 hergestellten Cellulose, dadurch gekennzeichnet, daß die Cellulose aus einer Lösung der Cellulose in tertiärem Aminoxid regeneriert wird.

9. Verwendung der nach einem oder mehreren der Ansprüche 1 bis 5 hergestellten Cellulose, dadurch gekennzeichnet, daß die Cellulose aus einer Lösung der Cellulose in einem LiCl-enthaltenden Lösungsmittel regeneriert wird.

**Claims**

1. Process for obtaining extractive-substance reduced cellulose with a low LAL reaction for the production of haemodialysis and/or haemofiltration membranes in the form of flat membranes, tubular membranes or hollow filaments by regeneration of a cellulose solution, characterised in that purified cotton linters or cellulose materials are, following the usual disintegration treatment, subjected for 1 to 4 hours to washing under pressure with water, lye with a concentration of less than 5 g alkali/l or a dilute acid with less than 5 g acid/l at temperatures from 120 to 170°C and at a pressure from 2 to 10 bar.

2. Process according to Claim 1, characterised in that washing under pressure takes place, during a period of 2 to 4 hours, at temperatures from 150 to 170°C and at a pressure of 5 to 10 bar.

3. Process according to one of Claims 1 or 2, characterised in that washing under pressure is effected with a dilute acid at a concentration of less than 1.5 g acid/l.

4. Process according to one of Claims 1 or 2, characterised in that washing under pressure is effected with a dilute lye at a concentration of less than 2 g alkali/l.

5. Process according to one or several of Claims 1 to 4, characterised in that washing under pressure is effected with the aid of dilute acids with a $pK_a$ value of 2.5 or more.

6. Use of the cellulose produced according to one or several of Claims 1 to 5 in the course of said regeneration from a solution of cellulose in cuprammonia.

7. Use of the cellulose produced according to one or several of Claims 1 to 5, characterised in that the cellulose is regenerated from a cellulose xanthate solution.

8. Use of the cellulose produced according to one or several of Claims 1 to 5, characterised in that the cellulose is regenerated from a solution of the cellulose in tertiary amine oxide.

9. Use of the cellulose produced according to one or several of Claims 1 to 5, characterised in that the cellulose is regenerated from a solution of the cellulose in a solvent containing LiCl.

**Revendications**

1. Procédé d'obtention de cellulose à teneur réduite en extrait, avec faible réaction LAL, pour la préparation de membranes d'hémodialyse et/ou de membranes d'hémofiltration, sous forme de membranes plates, de membranes en forme de tuyaux ou en forme de fibres creuses, par régénération d'une solution de cellulose, caractérisé en ce qu'on soumet des linters de coton ou de la cellulose, raffinés à la suite d'un traitement usuel d'attaque, à un lavage sous pression, au moyen de l'eau, d'une lessive ayant une concentration en alcali inférieure à 5 g/l ou au moyen d'un acide dilué ayant une teneur en acide inférieure à 5 g/l, à des températures de 120 à 170°C et sous une pression de 2 à 10 bar, pendant 1 à 4 heures.

**2.** Procédé selon la revendication 1, caractérisé en ce que le lavage sous pression est effectué à des températures de 150 à 170°C et sous une pression de 5 à 10 bar, pendant 2 à 4 heures.

**3.** Procédé selon la revendication 1 ou 2, caractérisé en ce que les lavages sous pression s'effectuent avec un acide dilué ayant une teneur en acide inférieure à 1,5 g/l.

**4.** Procédé selon la revendication 1 ou 2, caractérisé en ce que les lavages sous pression s'effectuent avec une lessive diluée ayant une teneur en alcali inférieure à 2 g/l.

**5.** Procédé selon une ou plusieurs des revendications 1 à 4, caractérisé en ce qu'il s'effectue au moyen d'acides dilués ayant une valeur $pK_a$ égale ou supérieure à 2,5.

**6.** Utilisation de la cellulose, préparée selon une ou plusieurs des revendications 1 à 5, par régénération à partir d'une solution de cellulose dans le Cuoxame.

**7.** Utilisation de la cellulose préparée, selon une ou plusieurs des revendications 1 à 5, caractérisée en ce que la cellulose est régénérée à partir d'une solution de xanthate de cellulose.

**8.** Utilisation de la cellulose, préparée selon une ou plusieurs des revendications 1 à 5, caractérisée en ce que la cellulose est régénérée à partir d'une solution de cellulose dans un oxyde d'amine tertiaire.

**9.** Utilisation de la cellulose, préparée selon une ou plusieurs des revendications 1 à 5, caractérisée en ce que la cellulose est régénérée à partir d'une solution de cellulose dans un solvant renfermant du LiCl.